(19) Europäisches Patentamt / European Patent Office / Office européen des brevets

(11) **EP 3 237 871 B1**

(12) **EUROPEAN PATENT SPECIFICATION**

(45) Date of publication and mention
of the grant of the patent:
**07.08.2019 Bulletin 2019/32**

(51) Int Cl.:
*G01L 27/00* (2006.01)     *G01L 23/22* (2006.01)
*G01L 23/24* (2006.01)

(21) Application number: **14824864.4**

(86) International application number:
**PCT/FI2014/051047**

(22) Date of filing: **22.12.2014**

(87) International publication number:
**WO 2016/102741 (30.06.2016 Gazette 2016/26)**

(54) **A METHOD OF CALIBRATING A PRESSURE SENSOR AND AN INTERNAL COMBUSTION PISTON ENGINE**

VERFAHREN ZUR KALIBRIERUNG EINES DRUCKSENSOR UND EINER VERBRENNUNGSMASCHINE

MÉTHODE POUR CALIBRER UNE SONDE DE PRESSION ET UN MOTEUR À COMBUSTION INTERNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.11.2017 Bulletin 2017/44**

(73) Proprietor: **Wärtsilä Finland Oy**
**65380 Vaasa (FI)**

(72) Inventors:
• **KAAS, Tom**
**FI-65410 Sundom (FI)**
• **NYLUND, Martin**
**FI-65100 Vaasa (FI)**

(74) Representative: **Genip Oy**
**Heikinkatu 7**
**48100 Kotka (FI)**

(56) References cited:
**EP-A1- 1 538 325     EP-A2- 1 936 157**
**EP-A2- 1 936 157     WO-A1-2007/013795**

## Description

### Technical field

The present invention relates to a method of calibrating a pressure sensor adapted to measure pressure in an internal combustion piston engine according to claim 1.

The present invention also relates to an internal combustion piston engine.

### Background art

The operational requirements of combustion engines are becoming more and more demanding. Exhaust gas emission requirements of internal combustion piston engines become more and more stringent. In order to cope with such requirements there are various techniques available by means of which the gaseous emissions may be controlled when the engine is running. On the other hand, it is not desirable that the overall performance of the engine will suffer resulted from actions aiming to reduce the emissions. Cylinder pressure gives valuable information about the combustion process of an internal combustion piston engine. Using the cylinder pressure many characteristic combustion parameters can be yielded. Thus, cylinder pressure sensors need to be very accurate so as to get reliable data from the engine and the combustion process. Even the smallest differences or variations in the sensitivity of the sensors may lead to inaccurate actions in controlling processes of the engine. This makes the engine to run in unsatisfactory manner. Thus the engine may not operate at its optimal efficiency. Particularly, the calibration of the sensors need extreme carefulness and meticulousness. There are also sensors available which indicates only a relative pressure instead of absolute one and therefore require accurate calibration.

The cylinder pressure sensors operate in harsh circumstances and incomplete combustion may cause damages to the sensors or its sensitiveness to measure the pressure accurately. Therefore, it is desirable to arrange a pressure sensor also into the intake manifold or alike (such as a receiver).

WO 2010124758 A1 discloses a method for estimating the pressure prevailing in an intake manifold of an internal combustion engine. Pressure of the intake manifold is estimated using an estimated value of the pressure at the intake valve closure point. Pressure is measured as a function of the angular position of the crankshaft other than the angle corresponding to the intake valve closure. The patent application EP1936157 also discloses a method of calibrating a cylinder pressure sensor.

In some cases, it may be assumed that the pressures in the receiver and the cylinder are substantially the same at the inlet valve closure point. In such a case the cylinder pressure sensors may be calibrated according to measured receiver pressure. However, there can be variations in cylinder pressure and receiver pressure at the inlet valve closure, for example, if the distance between the pressure measurement point in the receiver and the cylinder is long or there is standing oscillation waves in the receiver. Thus there is a need for adequate method to calibrate the pressure sensors.

An object of the invention is to provide a method of calibrating a cylinder pressure sensor adapted to measure pressure in an internal combustion piston engine in which the performance is considerably improved compared to the prior art solutions.

### Disclosure of the Invention

An object of the invention is met by a method of calibrating a cylinder pressure sensor adapted to measure pressure in an internal combustion piston engine, which method comprises during a compression phase before start of the ignition at least steps of,

> i. Measuring a pressure $p_m$ indicative to a pressure in the cylinder at a crank angle $(\vartheta_0 - \vartheta_1)$,

> ii. Determining a heat release characteristic during the crank angle range $(\vartheta_0 - \vartheta_1)$,

> iii. Calculating a change of cylinder volume at the crank angle range $(\vartheta_0 - \vartheta_1)$,

> iv. Estimating a pressure offset $\Delta p$ of the pressure measured in the step i. using the heat release characteristic determined in the step ii, and the volume change determined in step iii,

> v. Calibrating the cylinder pressure measurement with the estimated pressure offset.

This provides a method of calibrating a cylinder pressure sensor adapted to measure pressure in an internal combustion piston engine which performance is considerably improved. Therefore, the efficient manner of calibrating the cylinder pressure measurement, more accurate pressure measurements are obtained for controlling the operation of the engine. As it is well known, cylinder pressure is a very important measure used to obtain information about the combustion circumstances via the combustion parameters such as heat release, maximum pressure and maximum pressure derivative to name but a few. More specifically, accurate pressure measurement leads reduced fuel consumption and reduced gaseous emissions by making it possible to control the operation of the engine in more accurate manner.

According to an embodiment of the invention the heat release characteristic in step ii. is crank angle derivative of the heat release value. The derivative of the heat release value may also be called as heat release rate. Thus the pressure offset is estimated as a function of the derivative of the heat release value.

According to an embodiment of the invention the heat release characteristic in the step ii. is a heat release value obtained from a heat release rate and the pressure offset is estimated as a function of the heat release value and the cylinder volume change.

As it is well known for a system undergoing thermodynamics processes a change in the internal energy d$U$, constituting a first law of thermodynamics, can be obtained as

$$\mathrm{d}U = \mathrm{d}Q - \mathrm{d}W,$$

where d$Q$ is a heat transfer and d$W$ is a mechanical work. The mechanical work done in the cylinder of the engine can be written with pressure and volume as d$W = p$d$V$. In the case of ideal gas the change in the internal energy is d$U = nC_v$d$T$, where $n$ is the number of moles trapped inside the cylinder, $C_v$ is heat capacity at a constant volume, d$T$ is a change of temperature and d$V$ is a change of volume. Solving $T$ from the ideal gas law equation $pV = nRT$, above equation can be written as

$$\mathrm{d}Q = \frac{C_v}{R}\mathrm{d}(pV) + p\mathrm{d}V,$$

where $R$ is the universal gas constant. Simplifying above equation (taking the partial derivative of d($p$V) that is d($p$V) = $V$d$p$ + $p$d$V$ and rearranging terms), one obtains

$$\mathrm{d}Q = \left(\frac{C_v}{R} + 1\right)p\mathrm{d}V + \frac{C_v}{R}V\mathrm{d}p.$$

Using a heat capacity ratio $\gamma = C_p/C_v$, where $C_p$ is heat capacity at constant pressure, above equation can be written as

$$dQ = \frac{\gamma}{\gamma-1}p\mathrm{d}V + \frac{1}{\gamma-1}V\mathrm{d}p.$$

Defining a change in a crank angle position as d$\vartheta$, a heat release equation can be written as

$$\frac{\mathrm{d}Q}{\mathrm{d}\vartheta} = \frac{\gamma}{\gamma-1} \cdot p \cdot \frac{\mathrm{d}V}{\mathrm{d}\vartheta} + \frac{1}{\gamma-1} \cdot V \cdot \frac{\mathrm{d}p}{\mathrm{d}\vartheta}.$$

Generally, the pressure $p$ is a measured value and now the measured pressure indicative to pressure in the cylinder of the of the engine will be denoted as $p_m$. However, measured pressure $p_m$ usually includes an offset $\Delta p$ and thus the measured pressure $p_m$ can be expressed as

$$p_m = p + \Delta p,$$

where p is the actual pressure and $\Delta p$ is so-called pressure offset. Substituting the measured pressure $p_m$ into the heat release equation, one obtains an offset heat release as follows

$$\frac{\mathrm{d}Q}{\mathrm{d}\vartheta}_{offset} = \frac{\gamma}{\gamma-1} \cdot (p + \Delta p) \cdot \frac{\mathrm{d}V}{\mathrm{d}\vartheta} + \frac{1}{\gamma-1} \cdot V \cdot \frac{\mathrm{d}(p+\Delta p)}{\mathrm{d}\vartheta}.$$

Rearranging terms and using the heat release equation $\frac{\mathrm{d}Q}{\mathrm{d}\vartheta} = \frac{\gamma}{\gamma-1} \cdot p \cdot \frac{\mathrm{d}V}{\mathrm{d}\vartheta} + \frac{1}{\gamma-1} \cdot V \cdot \frac{\mathrm{d}p}{\mathrm{d}\vartheta}$ one obtains

$$\frac{\mathrm{d}Q}{\mathrm{d}\vartheta}_{offset} = \frac{\mathrm{d}Q}{\mathrm{d}\vartheta} + \frac{\gamma}{\gamma-1} \cdot \Delta p \cdot \frac{\mathrm{d}V}{\mathrm{d}\vartheta} + \frac{1}{\gamma-1} \cdot V \cdot \frac{\mathrm{d}(\Delta p)}{\mathrm{d}\vartheta}.$$

Finally, when assuming that the cylinder pressure offset is constant that means its derivative is constant $\frac{\mathrm{d}(\Delta p)}{\mathrm{d}\vartheta} = 0$, one obtains

$$\frac{\mathrm{d}Q}{\mathrm{d}\vartheta}_{offset} = \frac{\mathrm{d}Q}{\mathrm{d}\vartheta} + \frac{\gamma}{\gamma-1} \cdot \Delta p \cdot \frac{\mathrm{d}V}{\mathrm{d}\vartheta}.$$

During a compression phase before ignition, heat released into the cylinder is assumed to be zero which means that also the heat release rate is assumed to be zero as well. Then the heat release can be written as

$$\frac{\mathrm{d}Q}{\mathrm{d}\vartheta}_{offset} = \frac{\gamma}{\gamma-1} \cdot \Delta p \cdot \frac{\mathrm{d}V}{\mathrm{d}\vartheta}.$$

Thus the equation depicts a correlation between the heat release and the pressure offset in the measured pressure.

According to an embodiment of the invention, the pressure offset is estimated using a function

$$\Delta p = \frac{\frac{\mathrm{d}Q}{\mathrm{d}\vartheta}_{offset}}{\frac{\gamma}{\gamma-1}\frac{\mathrm{d}V}{\mathrm{d}\vartheta}},$$

here $\frac{\mathrm{d}Q}{\mathrm{d}\vartheta}_{offset}$ is determined value obtained in the step ii., $\gamma$ is the heat capacity ratio $\frac{C_p}{C_V}$, dV is differential change of volume in the cylinder, d$\vartheta$ is change of the crank angle. In this embodiment the pressure offset is estimated for a number of individual crank angle increments after which a mean value for the pressure offset during the compression phase is determined.

According to an embodiment of the invention, the step of determining a heat release value $Q$ during the crank angle range ($\vartheta_0$ - $\vartheta_1$) is accomplished by

$$\underbrace{\int_{\vartheta_0}^{\vartheta_1} \frac{\mathrm{d}Q}{\mathrm{d}\vartheta}_{offset} \mathrm{d}\vartheta}_{=Q_{offset}} = \int_{\vartheta_0}^{\vartheta_1} \left( \frac{\gamma}{\gamma-1} \cdot p \cdot \frac{\mathrm{d}V}{\mathrm{d}\vartheta} + \frac{1}{\gamma-1} \cdot V \cdot \frac{\mathrm{d}p}{\mathrm{d}\vartheta} \right) \mathrm{d}\vartheta$$

over the crank angle range ($\vartheta_0$ -> $\vartheta_1$).

According to an embodiment of the pressure offset $\Delta p$ is estimated using a function

$$\Delta p = \frac{Q}{V_{INT}},$$

where

$$Q = \int_{\vartheta_0}^{\vartheta_1} \frac{\mathrm{d}Q}{\mathrm{d}\vartheta} \mathrm{d}\vartheta$$

and

$$V_{INT} = \int_{\vartheta_0}^{\vartheta_1} \frac{\gamma}{\gamma - 1} \cdot \frac{\mathrm{d}V}{\mathrm{d}\vartheta} \mathrm{d}\vartheta.$$

In this embodiment the integrals of the heat release and cylinder volume over the specified crank angles are obtained first and the offset value is determined based to these.

According to an embodiment of the invention, an actual pressure in the cylinder is obtained as $p = p_m - \Delta p$.

Generally, the operation of one cylinder can be divided into four phases, whereas the engine may be a four stroke or two stroke engine: 1) intake phase, during which the combustion air is admitted to the cylinder, 2) compression phase wherein the piston moves towards its top dead center position and the pressure increases in the cylinder, 3) power phase wherein the expanding gas resulted from the fuel combustion forces the piston down the cylinder, and turning the crankshaft and the pressure in the cylinder decreases, and 4) exhaust phase for exhaust gas removal from the cylinder. The sequence of the phases from 1) to 4) is then repeated. One sequence of the phases from 1) to 4) is called as a one cycle. According to an embodiment of the invention, from cycle to cycle, the pressure offset from previous cycle is used to calibrate a measurement unit so as to improve calibration from cycle to cycle. Thus the calibration procedure can be called as an automatic calibration.

According to an embodiment of the invention, at a first compression phase of a first cycle the pressure offset $\Delta p$ is a predetermined value that is taken into account in calibration so as to obtain better pressure information in the cylinder.

According to an embodiment of the invention, the steps i. - iv. are taken more than once during the compression phase before start of the ignition.

According to an embodiment of the invention, the steps i. - iii. are taken more than once during the compression phase before start of the ignition and more than one offset pressures $\Delta p_1,...,\Delta p_n$, where $n > 1$, are obtained which are used as a response value in step iv.

According to an embodiment of the invention, the step iv. a mean value of the offset pressure are used as the response value meaning that the estimated pressure offset in the step iv. is the mean value $\overline{\Delta p}$ of the offset pressures $\Delta p_1,...,\Delta p_k$, where $k > 1$.

According to an embodiment of the invention the pressure $p_m$ indicative to pressure in the cylinder is a pressure measured directly in the cylinder.

According to an embodiment of the invention the pressure $p_m$ indicative to pressure in the cylinder is a pressure measured in an air receiver i.e. the manifold distributing the combustion air to the cylinders of the engine. In this embodiment the pressure offset takes account also the pressure losses and other similar factors between the combustion air receiver of the engine and the cylinder.

An object of the invention is met also by an internal combustion piston engine comprising

a. At least one cylinder,
b. A piston arranged to reciprocate inside the cylinder,
c. At least one pressure sensor arranged in connection with the cylinder.

It is characteristic to the invention that the engine comprises a calibration system comprising a measurement unit arranged to measure pressure indicative to a pressure in the cylinder with the at least one pressure sensor in the engine during a compression phase before start of an ignition, a heat release determination unit arranged to determine a heat release characteristic, an estimation unit arranged to estimate cylinder pressure offset of the measurement performed using the heat release characteristic and change of cylinder volume and a calibration unit arranged to calibrate the cylinder pressure sensor in response with the estimated cylinder pressure offset.

According to an embodiment of the invention, the engine comprises more than one cylinder.

According to an embodiment of the invention, the heat release determination unit comprises instructions to determine a heat release value.

According to an embodiment of the invention, a receiver connected with cylinders via conduits comprises at least one pressure sensor to measure pressure in the receiver and being in connection with the calibration system.

According to an embodiment of the invention the pressure sensor calibration system of the internal combustion piston engine is provided with instructions to execute a method of calibrating a cylinder pressure sensor according to anyone of the appended claims 1 - 14.

**Brief Description of Drawings**

In the following, the invention will be described with reference to the accompanying exemplary, schematic drawings, in which

Figure 1 illustrates a diagram of a method of calibrating a pressure sensor adapted to measure pressure in an internal combustion piston engine according to a first embodiment of the invention,

Figure 2 illustrates a diagram of a method of calibrating a pressure sensor adapted to measure pressure in an internal combustion piston engine according to a second embodiment of the invention, and

Figure 3 illustrates the combustion piston engine having a receiver with pressure sensors according to a third embodiment of the invention.

**Detailed Description of Drawings**

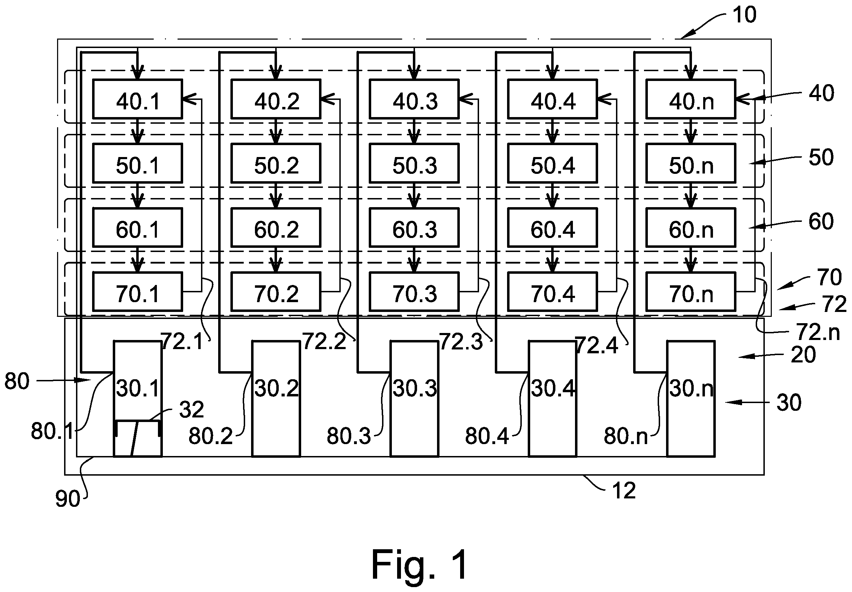

Figure 1 depicts schematically a pressure sensor calibration system 10 arranged to execute instructions to practice a method of calibrating a pressure sensor 80 in an internal combustion piston engine 12 according to an embodiment of the invention. The engine 12 comprises generally several cylinders 30 into each of which a piston 32 is arranged to reciprocate inside the cylinder 30 between the top dead center and the bottom dead center and thus rotate a crank shaft of the engine (not shown). In Figure 1 there is shown a first cylinder 30.1, a second cylinder 30.2, a third cylinder 30.3, a fourth cylinder 30.4 and an $n^{th}$ cylinder 30.n. Even though in the Figure 1 there is illustrated only one cylinder with a piston 30, each of the cylinders 30.1,...,30.n is provided with a piston.

The cylinder pressure sensor calibration system 10 of the engine 12 comprises a measuring unit 40 arranged to measure pressure in each of the cylinders 30.1,..,30.n during a compression phase before start of the ignition at a crank angle $\vartheta_0$ using the pressure sensor 80. Cylinder pressure of each cylinder 30.1, 30.2, 30.3, 30.4,..., 30.n is measured by the measurement unit 40, individually 40.1, 40.2, 40.3, 40.4,..., 40.n at least at a one predetermined crank angle position $\vartheta_0$. Each cylinder 30.1, 30.2, 30.3, 30.4,..., 30.n is provided with pressure sensors 80.1, 80.2, 80.3, 80.4,...,80.n to measure the pressure in the cylinder. Particularly, the crank angle can be detected by a crank angle determination system 90 and the position is made available to the calibration system 10. Knowing the details of the engine a volume of the combustion chamber in the cylinder can be calculated for any crank angle positions with substantial accuracy. Alternatively the calibration system can be provided with a volume lookup table providing values for cylinder volume for specific, distinct crank angle values.

The calibration system 10 further comprises a heat release determination unit 50, with optional individual determination units 50.1, 50.2, 50.3, 50.4,..., 50.n for each cylinder, that is arranged to determine a heat release characteristic during a crank angle range $\vartheta_0 - \vartheta_1$. The heat release characteristic may be a heat release value, which can be determined by any conventional manner, for example, by using a least square estimation.

A general formula for the heat release $\dfrac{dQ}{d\vartheta}$ is as follows

$$\frac{dQ}{d\vartheta} = \frac{\gamma}{\gamma-1} \cdot p \cdot \frac{dV}{d\vartheta} + \frac{1}{\gamma-1} \cdot V \cdot \frac{dp}{d\vartheta}, \qquad (1)$$

where $\gamma$ is a heat capacity ratio $\dfrac{c_p}{c_V}$, $p$ is pressure, $V$ is volume, $dV$ is change of volume in the cylinder, $d\vartheta$ is change of a crank angle and $dp$ is change of pressure in the cylinder. Integrating the heat release equation (1) with respect to crank angle, herein a range $\vartheta_0 \to \vartheta_1$, one obtains a heat release $Q$ that is

$$\underbrace{\int_{\vartheta0}^{\vartheta1} \frac{\mathrm{d}Q}{\mathrm{d}\vartheta}\,\mathrm{d}\vartheta}_{=Q} = \int_{\vartheta0}^{\vartheta1} \left( \frac{\gamma}{\gamma-1} \cdot p \cdot \frac{\mathrm{d}V}{\mathrm{d}\vartheta} + \frac{1}{\gamma-1} \cdot V \cdot \frac{\mathrm{d}p}{\mathrm{d}\vartheta} \right) \mathrm{d}\vartheta.$$

Measured pressure $p_m$ can be expressed as

$$p_m = p + \Delta p, \tag{2}$$

where p is the actual pressure and $\Delta p$ is so-called pressure offset. The pressure offset $\Delta p$ is a factor which may be determined according to the invention. Inserting the measured pressure equation (2) into equation (1), an offset heat release can be written as

$$\frac{\mathrm{d}Q}{\mathrm{d}\vartheta}_{offset} = \frac{\gamma}{\gamma-1} \cdot (p + \Delta p) \cdot \frac{\mathrm{d}V}{\mathrm{d}\vartheta} + \frac{1}{\gamma-1} \cdot V \cdot \frac{\mathrm{d}(p+\Delta p)}{\mathrm{d}\vartheta}.$$

Rearranging terms and using equation (1) one obtains

$$\frac{\mathrm{d}Q}{\mathrm{d}\vartheta}_{offset} = \frac{\mathrm{d}Q}{\mathrm{d}\vartheta} + \frac{\gamma}{\gamma-1} \cdot \Delta p \cdot \frac{\mathrm{d}V}{\mathrm{d}\vartheta} + \frac{1}{\gamma-1} \cdot V \cdot \frac{\mathrm{d}(\Delta p)}{\mathrm{d}\vartheta}.$$

Finally, when assuming that the cylinder pressure offset is constant that means its derivative is constant $\frac{\mathrm{d}(\Delta p)}{\mathrm{d}\vartheta} = 0,$ one obtains

$$\frac{\mathrm{d}Q}{\mathrm{d}\vartheta}_{offset} = \frac{\mathrm{d}Q}{\mathrm{d}\vartheta} + \frac{\gamma}{\gamma-1} \cdot \Delta p \cdot \frac{\mathrm{d}V}{\mathrm{d}\vartheta}. \tag{3}$$

However, during the compression phase before ignition, heat released in the cylinder is assumed to be zero and thus the term $\frac{\mathrm{d}Q}{\mathrm{d}\vartheta}$ is respectively zero. The heat release $\frac{\mathrm{d}Q}{\mathrm{d}\vartheta}_{offset}$ may be called as an offset heat release.

From equation (3), the pressure offset $\Delta p$ can be solved and the following relation can be written

$$\Delta p = \frac{\frac{\mathrm{d}Q}{\mathrm{d}\vartheta}_{offset}}{\frac{\gamma}{\gamma-1}\frac{\mathrm{d}V}{\mathrm{d}\vartheta}}, \tag{4}$$

where it is assumed already that the heat release without the pressure offset is zero that is $\frac{\mathrm{d}Q}{\mathrm{d}\vartheta} = 0.$

Thus according to an embodiment of the invention the pressure offset is determined by obtaining the heat release $\frac{\mathrm{d}Q}{\mathrm{d}\vartheta}_{offset}$ and the vol-ume $\Delta V = \frac{\gamma}{\gamma-1}\frac{dV}{\mathrm{d}\vartheta}$ for a number of individual crank angle increments after which a mean value for the pressure offset during the compression phase is determined.

Specifically, equation (4) gives information of possible calibration error in the measurement and a value of equation (4) can be used in closed loop for calibration of the pressure sensors. The pressure offset $\Delta p$ is estimated at an estimation unit 60 comprising estimation units 60.1, 60.2, 60.3, 60.4,..., 60.n for each cylinder 30.1, 30.2, 30.3, 30.4,..., 30.n using the heat release value $\frac{\mathrm{d}Q}{\mathrm{d}\vartheta}_{offset}$ determined at the heat release determination unit 50 and the change of cylinder volume .

According to another embodiment of the invention the integration of the heat release rate

$$\frac{dQ}{\mathrm{d}\vartheta} = \frac{\gamma}{\gamma - 1} \cdot p \frac{\mathrm{d}V}{\mathrm{d}\vartheta} + \frac{1}{\gamma - 1} \cdot V \frac{\mathrm{dp}}{\mathrm{d}\vartheta}$$

and the volume change

$$\Delta V = \frac{\gamma}{\gamma - 1} \frac{\mathrm{d}V}{\mathrm{d}\vartheta}$$

are performed over the compression phase after which the pressure offset during the compression phase is determined as a ratio of the heat release value and the volume change.

According to a further embodiment of the invention a discrete approximation method known as such may be used instead of the integration methods. The measurements, determinations and calculations can be made for example at 1 degree of crank angle resolution, or with higher resolution.

Calibration of the cylinder pressure measurement is obtained at a calibration unit 70 with the estimated pressure offset $\Delta p$. A line 72 depicts that information concerning the calibration from the calibration unit 70 is taken into account in the measuring unit 40. Calibration information via lines 72.1, 72.2, 72.3, 72.4,...,72.n is transferred individually for each cylinders 30.1, 30.2, 30.3, 30.4,..., 30.n. This means that the pressure sensors 80 can be calibrated to indicate correct actual pressure prevailing in the cylinder. In other words, the actual pressure $p$ in the cylinder can be obtained from equation (2) as follows

$$p = p_m - \Delta p. \qquad\qquad (5)$$

It should be noted that the estimated pressure offset $\Delta p$ can be used in the measuring unit 40 from the previous cycle. This provides an auto-calibration scheme for the pressure sensors 80 by using cycle to cycle compensation using the offset pressure.

According to an embodiment of the invention, during the compression phase before ignition the pressure is measured more than once at the measuring unit 40, the heat release $\frac{\mathrm{d}Q}{\mathrm{d}\vartheta}_{offset}$ is determined at the determination unit 50, the pressure offset $\Delta p$ is estimated at the estimation unit 60 and the cylinder pressure measurement is calibrated with the estimated offset pressure $\Delta p$. For example, if the pressure in the cylinder is measured three times and three values for pressure is obtained $p_1$, $p_2$ and $p_3$. Then it is possible to obtain thee heat release values which are $Q_1$, $Q_2$ and $Q_3$ as well as three heat release values $\frac{\mathrm{d}Q_1}{\mathrm{d}\vartheta}$, $\frac{\mathrm{d}Q_2}{\mathrm{d}\vartheta}$ and $\frac{\mathrm{d}Q_3}{\mathrm{d}\vartheta}$. Three pressure offset values can be determined as $\Delta p_1$, $\Delta p_2$ and $\Delta p_3$ using the three heat release values $Q_1$, $Q_2$ and $Q_3$ or preferably three heat release values $\frac{\mathrm{d}Q_1}{\mathrm{d}\vartheta}$, $\frac{\mathrm{d}Q_2}{\mathrm{d}\vartheta}$ and $\frac{\mathrm{d}Q_3}{\mathrm{d}\vartheta}$. When computing, for example, a mean pressure offset $\overline{\Delta p} = (\Delta p_1 + \Delta p_2 + \Delta p_3)/3$ one gets an estimation for the pressure offset. Then the mean value $\overline{\Delta p}$ is used in the calibration and this means that the estimated pressure offset is the mean value $\overline{\Delta p}$ of the offset pressures $\Delta p_1$, $\Delta p_2$ and $\Delta p_3$.

Figure 1 illustrates schematically that the measurement unit 40, the determination unit 50, the estimation unit 60 and the calibration unit 70 are individual units. However, it should be understood that the measurement unit 40, the determination unit 50, the estimation unit 60 and the calibration unit 70 may be arranged into a one physical unit that can be called e.g. as an adjustment unit that comprises instructions to measure, determine, estimate and calibrate in a previously described manner.

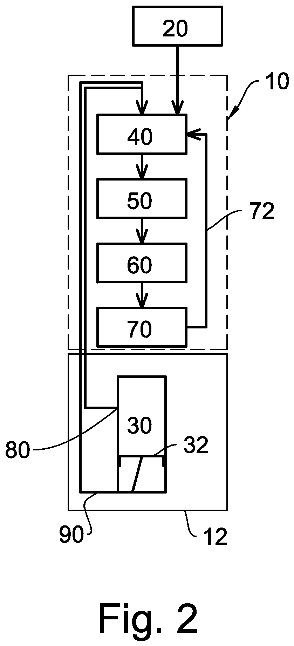

Figure 2 illustrates another embodiment of the invention. At a first compression phase of a first cycle the pressure offset $\Delta p$ is a predetermined value that is taken into account in calibration so as to obtain better pressure information in the cylinder. However, from the second cycle forward, the pressure offset $\Delta p$ is determined during each compression phase before ignition as described earlier and the determined pressure offset $\Delta p$ from previous cycle is used in calibration the forward measurement.

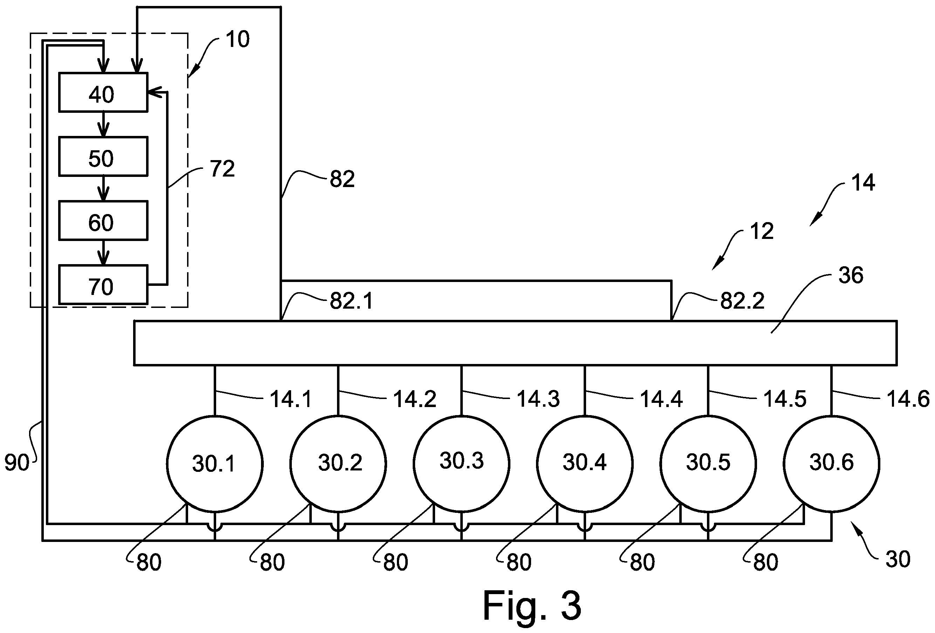

Figure 3 illustrates schematically the internal combustion piston engine 12 comprising the pressure sensor calibration system 10 arranged calibrate the measured pressure values. The engine 12 comprises a receiver 36 from which at least the combustion air is introduced into the cylinders 30.1, 30.2, 30.3, 30.4, 30.5 and 30.6 via conduits 14.

Pressure in the receiver 36 is also monitored by a pressure sensor 82. The receiver 36 is provided at least one pressure sensor 82 connected into the receiver 36 so as to measure pressure prevailing in the receiver 36. Figure 3 shows two pressure sensors 82.1, 82.2 connected to the receiver 36, however, the number of pressure sensors is not restricted to two. Similarly, as the pressure sensors 80 in the cylinders 30, the pressure sensors 82 connected into the receiver 36 can be calibrated. The pressure information from the receiver 36 is delivered via the measurement unit 40, a heat release in the receiver 36 is obtained at the determination unit 50, and a pressure offset $\Delta p_{rec}$ in the receiver 36 can be estimated in the estimation unit 60. Finally, calibration of the receiver pressure measurement is obtained at the calibration unit 70 with the estimated pressure offset $\Delta p_{rec}$ in the receiver 36. Similarly as earlier, the line 72 depicts that information concerning the calibration from the calibration unit 70 is taken into account in the measuring unit 40. Figure 3 illustrates schematically six cylinders but in practice the number of cylinders may be different.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

## Claims

1. A method of calibrating a cylinder pressure sensor (80) adapted to measure pressure in an internal combustion piston engine (12), which method comprises during a compression phase before start of the ignition at least steps of,

   i. Measuring a pressure $p_m$ indicative to pressure in the cylinder (30) at a crank angle range ($\vartheta_0$ - $\vartheta_1$),
   ii. Determining a heat release characteristic during the crank angle range ($\vartheta_0$ - $\vartheta_1$),
   iii. Calculating a change of cylinder volume at the crank angle range ($\vartheta_0$ - $\vartheta_1$),
   iv. Estimating a pressure offset $\Delta p$ of the pressure measured in the step i. using the heat release characteristic determined in the step ii, and the volume change determined in step iii.
   v. Calibrating the cylinder pressure measurement with the estimated pressure offset $\Delta p$.

2. A method of calibrating a cylinder pressure sensor (80) according to claim 1, **wherein** the heat release characteristic in the step ii. is crank angle derivative of the heat release value and in the step iv the pressure offset is estimated as a function of the derivative of the heat release value and the volume change of the cylinder.

3. A method of calibrating a cylinder pressure sensor (80) according to claim 1, **wherein** the heat release characteristic in the step ii. is a heat release value obtained from a heat release rate.

4. A method of calibrating a cylinder pressure sensor (80) according to claim 2, **wherein** the pressure offset $\Delta p$ is estimated using a function

$$\Delta p = \frac{\frac{dQ}{d\vartheta}_{offset}}{\frac{\gamma}{\gamma-1}\frac{dV}{d\vartheta}},$$

where $\frac{dQ}{d\vartheta}_{offset}$ is the heat release rate obtained in the step ii., y is a heat capacity ratio $\frac{c_p}{c_V}$, $dV$ is change of volume in the cylinder, $d\vartheta$ is change of the crank angle.

5. A method of calibrating a cylinder pressure sensor (80) according to claim 3, **wherein** the step of determining a heat release value $Q$ during the crank angle range ($\vartheta_0$ - $\vartheta_1$) is accomplished by

$$\underbrace{\int_{\vartheta_0}^{\vartheta_1} \frac{dQ}{d\vartheta}_{offset} \, d\vartheta}_{=Q_{offset}} = \int_{\vartheta_0}^{\vartheta_1} \left( \frac{\gamma}{\gamma - 1} \cdot p \cdot \frac{dV}{d\vartheta} + \frac{1}{\gamma - 1} \cdot V \cdot \frac{dp}{d\vartheta} \right) d\vartheta$$

over the crank angle range $(\vartheta_0 - \vartheta_1)$.

6. A method of calibrating a cylinder pressure sensor (80) according to claim 5, **characterized in that** the pressure offset $\Delta p$ is estimated using a function

$$\Delta p = \frac{Q}{V_{INT}},$$

where

$$V_{INT} = \int_{\vartheta_0}^{\vartheta_1} \frac{\gamma}{\gamma - 1} \cdot \frac{\mathrm{d}V}{\mathrm{d}\vartheta}\, \mathrm{d}\vartheta.$$

7. A method of calibrating a cylinder pressure sensor (80) according to anyone of claims 1-5, **wherein** an actual pressure in the cylinder (30) is obtained by subtracting the pressure offset $\Delta p$ from the pressure $p_m$ indicative to pressure in the cylinder (30).

8. A method of calibrating a cylinder pressure sensor (80) according to anyone of claims 1 or 7, **wherein** the pressure $p_m$ indicative to pressure in the cylinder (30) is a pressure measured directly in the cylinder (30).

9. A method of calibrating a cylinder pressure sensor (80) according to anyone of claims 1 or 7, **wherein** the pressure $p_m$ indicative to pressure in the cylinder (30) is a pressure measured in a receiver of the engine.

10. A method of calibrating a pressure sensor (80) according to anyone of claims 1-6, **wherein** from cycle to cycle, the pressure offset from previous cycle is used to calibrate a measurement unit (40) so as to improve calibration from cycle to cycle.

11. A method of calibrating a pressure sensor (80) according to claim 1, **wherein** at a first compression phase of a first cycle the pressure offset $\Delta p$ is a predetermined value that is taken into account in calibration so as to obtain better pressure information in the cylinder (30).

12. A method of calibrating a pressure sensor (80) according to claims 1-2, **wherein** the steps i. - iv. are executed more than once during a compression phase before start of the ignition.

13. A method of calibrating a pressure sensor according to claim 9, **wherein** the steps i. - iii. are executed more than once during a compression phase before start of the ignition and more than one offset pressures $\Delta p_1, ... , \Delta p_k$, where $k > 1$, are obtained which are used as a response value in step iv.

14. A method of calibrating a pressure sensor (80) according to claim 10, **wherein** the step iv. a mean value of the offset pressure are used as the response value meaning that the estimated pressure offset in the step iv. is the mean value $\overline{\Delta p}$ of the offset pressures $\Delta p_1, ... , \Delta p_n$, where n > 1.

15. An internal combustion piston engine (12) comprising

    a. At least one cylinder (30),
    b. A piston (32) arranged to reciprocate inside the cylinder (30),
    c. At least one pressure sensor (80) arranged in connection with the cylinder (30),

**characterized in that** the engine comprises a pressure sensor calibration system (10) comprising a measurement unit (40) arranged to measure pressure indicative to a pressure in the cylinder with the at least one pressure sensor (80) in the engine during a compression phase before start of an ignition in the cylinder, a heat release determination unit (50) arranged to determine a heat release characteristic, an estimation unit (60) arranged to estimate cylinder pressure offset of the pressure measurement performed using the heat release characteristic and change of cylinder volume, and a calibration unit (70) arranged to calibrate the pressure sensor (80) in response with the estimated cylinder pressure offset.

16. An internal combustion piston engine according to claim 15, **characterized in that** a receiver (36) connected with cylinders (30) via conduits (14) comprises at least one pressure sensor (82) to measure pressure in the receiver (36) and being in connection with the calibration system (10).

17. An internal combustion piston engine according to claim 15, **characterized in that** pressure sensor calibration system (10) is provided with instructions to execute a method of calibrating a cylinder pressure sensor according to anyone of the claims 1 - 14.


**Patentansprüche**

1. Verfahren zur Kalibrierung eines Zylinderdrucksensors (80), der dafür ausgelegt ist, um in einer Brennkraftkolbenmaschine (12) den Druck zu messen, wobei das Verfahren während einer Kompressionsphase vor dem Start der Zündung mindestens die folgenden Schritte umfasst:

   i. Messen eines Drucks $p_m$, der einen Hinweis auf einen Druck in dem Zylinder (30) bei einem Kurbelwinkelbereich von $(\vartheta_0 - \vartheta_1)$ liefert,
   ii. Bestimmen einer Wärmefreisetzungscharakteristik während des Kurbelwinkelbereichs von $(\vartheta_0 - \vartheta_1)$,
   iii. Berechnen einer Veränderung eines Zylindervolumens bei dem Kurbelwinkelbereich von $(\vartheta_0 - \vartheta_1)$,
   iv. Schätzen einer Druckabweichung $\Delta p$ des Drucks, der in dem Schritt i. gemessen worden ist, unter Verwendung der Wärmefreisetzungscharakteristik, die in dem Schritt ii. bestimmt worden ist, und der Volumenveränderung, die in dem Schritt iii. bestimmt worden ist.
   v. Kalibrierung der Zylinderdruckmessung mit der geschätzten Druckabweichung $\Delta p$.

2. Verfahren zur Kalibrierung eines Zylinderdrucksensors (80) nach Anspruch 1, wobei die Wärmefreisetzungscharakteristik in dem Schritt ii. eine Kurbelwinkelableitung des Wärmefreisetzungswerts ist, und wobei in dem Schritt iv die Druckabweichung als eine Funktion der Ableitung des Wärmefreisetzungswerts und der Volumenveränderung des Zylinders geschätzt wird.

3. Verfahren zur Kalibrierung eines Zylinderdrucksensors (80) nach Anspruch 1, wobei die Wärmefreisetzungscharakteristik in dem Schritt ii. ein Wärmefreisetzungswert ist, der aus der Wärmefreisetzungsrate erhalten worden ist.

4. Verfahren zur Kalibrierung eines Zylinderdrucksensors (80) nach Anspruch 2, wobei die Druckabweichung $\Delta p$ unter Verwendung einer Funktion

$$\Delta p = \frac{\dfrac{dQ}{d\vartheta}_{offset}}{\dfrac{\gamma}{\gamma-1}\dfrac{dV}{d\vartheta}},$$

geschätzt wird, wobei $\dfrac{dQ}{d\vartheta}_{offset}$ die Wärmefreisetzungsrate ist, die in dem Schritt ii. erhalten worden ist, $\gamma$ ein Wärmekapazitätsverhältnis $\dfrac{c_p}{c_v}$ ist, dV die Volumenveränderung in dem Zylinder ist, d$\vartheta$ die Veränderung des Kurbelwinkels ist.

5. Verfahren zur Kalibrierung eines Zylinderdrucksensors (80) nach Anspruch 3, wobei der Schritt des Bestimmens eines Wärmefreisetzungswerts Q während des Kurbelwinkelbereichs von $(\vartheta_0 - \vartheta_1)$ durchgeführt wird durch

$$\underbrace{\int_{\vartheta_0}^{\vartheta_1} \frac{dQ}{d\vartheta}_{offset}\, d\vartheta}_{=Q_{offset}} = \int_{\vartheta_0}^{\vartheta_1} \left( \frac{\gamma}{\gamma - 1} \cdot p \cdot \frac{dV}{d\vartheta} + \frac{1}{\gamma - 1} \cdot V \cdot \frac{dp}{d\vartheta} \right) d\vartheta$$

über den Kurbelwinkelbereich von $(\vartheta_0 - \vartheta_1)$.

6. Verfahren zur Kalibrierung eines Zylinderdrucksensors (80) nach Anspruch 5, **dadurch gekennzeichnet, dass** die Druckabweichung $\Delta p$ unter Verwendung einer Funktion

$$\Delta p = \frac{Q}{V_{INT}},$$

geschätzt wird,
wobei

$$V_{INT} = \int_{\vartheta_0}^{\vartheta_1} \frac{\gamma}{\gamma - 1} \cdot \frac{dV}{d\vartheta}\, d\vartheta.$$

7. Verfahren zur Kalibrierung eines Zylinderdrucksensors (80) nach einem der Ansprüche 1 - 5, wobei der tatsächliche Druck in dem Zylinder (30) erhalten wird, indem die Druckabweichung $\Delta p$ von dem Druck $p_m$, der einen Hinweis auf den Druck in dem Zylinder (30) liefert, subtrahiert wird.

8. Verfahren zur Kalibrierung eines Zylinderdrucksensors (80) nach einem der Ansprüche 1 oder 7, wobei der Druck $p_m$, der einen Hinweis auf den Druck in dem Zylinder (30) liefert, ein Druck ist, der direkt in dem Zylinder (30) gemessen wird.

9. Verfahren zur Kalibrierung eines Zylinderdrucksensors (80) nach einem der Ansprüche 1 oder 7, wobei der Druck $p_m$, der einen Hinweis auf den Druck in dem Zylinder (30) liefert, ein Druck ist, der direkt in einem Empfänger der Maschine gemessen wird.

10. Verfahren zur Kalibrierung eines Drucksensors (80) nach einem der Ansprüche 1 - 6, wobei die Druckabweichung von Zyklus zu Zyklus von dem vorhergehenden Zyklus verwendet wird, um eine Messeinheit (40) zu kalibrieren, um so die Kalibrierung von Zyklus zu Zyklus zu verbessern.

11. Verfahren zur Kalibrierung eines Drucksensors (80) nach Anspruch 1, wobei in einer ersten Kompressionsphase eines ersten Zyklus die Druckabweichung $\Delta p$ ein vorgegebener Wert ist, der bei der Kalibrierung berücksichtigt werden muss, um eine bessere Druckinformation in dem Zylinder (30) zu erhalten.

12. Verfahren zur Kalibrierung eines Drucksensors (80) nach den Ansprüchen 1 - 2, wobei die Schritte i. - iv. während einer Kompressionsphase vor dem Start der Zündung mehr als einmal ausgeführt werden.

13. Verfahren zur Kalibrierung eines Drucksensors nach Anspruch 9, wobei die Schritte i. - iii. während einer Kompressionsphase vor dem Start der Zündung mehr als einmal ausgeführt werden, und wobei mehr Druckabweichungen als eine, nämlich $\Delta p_1, ..., \Delta p_k$, wobei $k > 1$ ist, erhalten werden, die als ein Antwortwert in Schritt iv. verwendet werden.

14. Verfahren zur Kalibrierung eines Drucksensors (80) nach Anspruch 10, wobei der Schritt iv., ein Mittelwert der Druckabweichung, als ein Antwortwert verwendet wird, der bedeutet, dass die geschätzte Druckabweichung in dem Schritt iv. der Mittelwert $\overline{\Delta p}$ der Druckabweichungen $\Delta p_1$, ..., $\Delta p_n$ ist, wobei $n > 1$ ist.

**15.** Brennkraftkolbenmaschine (12), die Folgendes umfasst:

a. mindestens einen Zylinder (30),
b. einen Kolben (32), der angeordnet ist, um innerhalb des Zylinders (30) eine hin- und hergehende Bewegung durchzuführen,
c. mindestens einen Drucksensor (80), der in einer Verbindung mit dem Zylinder (30) angeordnet ist,

**dadurch gekennzeichnet, dass** die Maschine ein Kalibrierungssystem (10) eines Drucksensors umfasst, das eine Messeinheit (40), die angeordnet ist, um einen Druck zu messen, der einen Hinweis auf einen Druck in dem Zylinder mit dem mindestens einen Drucksensor (80) in der Maschine während einer Kompressionsphase vor einem Start einer Zündung in dem Zylinder liefert, eine Einheit (50) zur Bestimmung der Wärmefreisetzung, die angeordnet ist, um eine Wärmefreisetzungscharakteristik zu bestimmen, eine Schätzeinheit (60), die angeordnet ist, um eine Zylinderdruckabweichung der Druckmessung, die unter Verwendung der Wärmefreisetzungscharakteristik und der Veränderung des Zylindervolumens durchgeführt worden ist, zu schätzen, und eine Kalibrierungseinheit (70), die angeordnet ist, um den Drucksensor (80) als Antwort auf die geschätzte Zylinderdruckabweichung zu kalibrieren, umfasst.

**16.** Brennkraftkolbenmaschine nach Anspruch 15, **dadurch gekennzeichnet, dass** ein Empfänger (36), der mit den Zylindern (30) über Leitungen (14) verbunden ist, mindestens einen Drucksensor (82) umfasst, um einen Druck in dem Empfänger (36) zu messen, und dass er in Verbindung mit dem Kalibrierungssystem (10) steht.

**17.** Brennkraftkolbenmaschine nach Anspruch 15, **dadurch gekennzeichnet, dass** ein Kalibrierungssystem (10) eines Drucksensors mit Anweisungen versehen ist, um ein Verfahren zur Kalibrierung eines Zylinderdrucksensors nach einem der Ansprüche 1 - 14 auszuführen.

# Revendications

**1.** Procédé d'étalonnage d'un capteur de pression de cylindre (80) adapté pour mesurer une pression dans un moteur à combustion interne à piston (12), lequel procédé comprend, pendant une phase de compression avant le début de l'allumage, au moins les étapes suivantes :

i. la mesure d'une pression $p_m$ indicative d'une pression dans le cylindre (30) à une plage d'angle de vilebrequin ($\vartheta_0$-$\vartheta 1$),
ii. la détermination d'une caractéristique de dégagement de chaleur pendant la plage d'angle de vilebrequin ($\vartheta_0$-$\vartheta 1$),
iii. le calcul d'une variation de volume de cylindre à la plage d'angle de vilebrequin ($\vartheta_0$-$\vartheta 1$),
iv. l'évaluation d'un décalage de pression $\Delta p$ de la pression mesurée à l'étape i. en utilisant la caractéristique de dégagement de chaleur déterminée à l'étape ii. et la variation de volume déterminée à l'étape iii.,
v. l'étalonnage de la mesure de pression de cylindre avec le décalage de pression $\Delta p$ évalué.

**2.** Procédé d'étalonnage d'un capteur de pression de cylindre (80) selon la revendication 1, dans lequel la caractéristique de dégagement de chaleur à l'étape ii. est une dérivée d'angle de vilebrequin de la valeur de dégagement de chaleur et à l'étape iv., le décalage de pression est évalué en tant qu'une fonction de la dérivée de la valeur de dégagement de chaleur et la variation de volume du cylindre.

**3.** Procédé d'étalonnage d'un capteur de pression de cylindre (80) selon la revendication 1, dans lequel la caractéristique de dégagement de chaleur à l'étape ii. est une valeur de dégagement de chaleur obtenue à partir d'un taux de dégagement de chaleur.

**4.** Procédé d'étalonnage d'un capteur de pression de cylindre (80) selon la revendication 2, dans lequel le décalage de pression $\Delta p$ est évalué en utilisant une fonction

$$\Delta p = \frac{\frac{\mathrm{d}Q}{\mathrm{d}\vartheta}_{offset}}{\frac{\gamma}{\gamma-1}\frac{\mathrm{d}V}{\mathrm{d}\vartheta}},$$

où $\dfrac{\mathrm{d}Q}{\mathrm{d}\vartheta}_{offset}$ est le taux de dégagement de chaleur obtenu à l'étape ii., $y$ est un rapport de capacité calorifique $\dfrac{c_p}{c_V}$, dV est une variation de volume dans le cylindre, d$\vartheta$ est une variation d'angle de vilebrequin.

5. Procédé d'étalonnage d'un capteur de pression de cylindre (80) selon la revendication 3, dans lequel l'étape de détermination d'une valeur de dégagement de chaleur $Q$ pendant la plage d'angle de vilebrequin ($\vartheta_0$-$\vartheta_1$) est accomplie grâce à

$$\underbrace{\int_{\vartheta_0}^{\vartheta_1} \frac{\mathrm{d}Q}{\mathrm{d}\vartheta}_{offset} \mathrm{d}\vartheta}_{=Q_{offset}} = \int_{\vartheta_0}^{\vartheta_1} \left( \frac{\gamma}{\gamma-1} \cdot p \cdot \frac{\mathrm{d}V}{\mathrm{d}\vartheta} + \frac{1}{\gamma-1} \cdot V \cdot \frac{\mathrm{d}p}{\mathrm{d}\vartheta} \right) \mathrm{d}\vartheta$$

dans la plage d'angle de vilebrequin ($\vartheta_0$-$\vartheta_1$).

6. Procédé d'étalonnage d'un capteur de pression de cylindre (80) selon la revendication 5, **caractérisé en ce que** le décalage de pression $\Delta p$ est évalué en utilisant une fonction

$$\Delta p = \frac{Q}{V_{INT}},$$

où

$$V_{INT} = \int_{\vartheta_0}^{\vartheta_1} \frac{\gamma}{\gamma-1} \cdot \frac{\mathrm{d}V}{\mathrm{d}\vartheta} \mathrm{d}\vartheta .$$

7. Procédé d'étalonnage d'un capteur de pression de cylindre (80) selon l'une quelconque des revendications 1 - 5, dans lequel une pression actuelle dans le cylindre (30) est obtenue en soustrayant le décalage de pression $\Delta p$ de la pression $p_m$ indicative de la pression dans le cylindre (30).

8. Procédé d'étalonnage d'un capteur de pression de cylindre (80) selon l'une quelconque des revendications 1 à 7, dans lequel la pression $p_m$ indicative de la pression dans le cylindre (30) est une pression mesurée directement dans le cylindre (30) .

9. Procédé d'étalonnage d'un capteur de pression de cylindre (80) selon l'une quelconque des revendications 1 ou 7, dans lequel la pression $p_m$ indicative de la pression dans le cylindre (30) est une pression mesurée dans un collecteur du moteur.

10. Procédé d'étalonnage d'un capteur de pression (80) selon l'une quelconque des revendications 1 - 6, dans lequel, d'un cycle à l'autre, le décalage de pression du cycle précédent est utilisé pour étalonner une unité de mesure (40) de manière à améliorer l'étalonnage d'un cycle à l'autre.

11. Procédé d'étalonnage d'un capteur de pression (80) selon la revendication 1, dans lequel, dans une première phase de compression d'un premier cycle, le décalage de pression $\Delta p$ est une valeur prédéterminée prise en compte dans l'étalonnage de manière à obtenir une meilleure information de pression dans le cylindre (30) .

12. Procédé d'étalonnage d'un capteur de pression (80) selon les revendications 1 - 2, dans lequel les étapes i. - iv. sont exécutées plus d'une fois pendant une phase de compression avant le début de l'allumage.

13. Procédé d'étalonnage d'un capteur de pression selon la revendication 9, dans lequel les étapes i. - iii. sont exécutées plus d'une fois pendant une phase de compression avant le début de l'allumage et plus d'une pression de décalage $\Delta p1$, ..., $\Delta pk$ avec k > 1 sont obtenues, lesquelles sont utilisées en tant que valeur de réponse à l'étape iv.

14. Procédé d'étalonnage d'un capteur de pression (80) selon la revendication 10, dans lequel à l'étape iv., une valeur moyenne des pressions de décalage est utilisée en tant que valeur de réponse, signifiant que le décalage de pression évalué à l'étape iv. est la valeur moyenne $\overline{\Delta p}$ des pressions de décalage $\Delta p1$, ..., $\Delta pk$ avec n > 1.

15. Moteur à combustion interne à piston (12) comprenant :

   a. au moins un cylindre (30),
   b. un piston (32) étudié pour aller et venir à l'intérieur du cylindre (30),
   c. au moins un capteur de pression (80) disposé en connexion avec le cylindre (30),

   **caractérisé en ce que** le moteur comprend un système d'étalonnage de capteur de pression (10) comprenant une unité de mesure (40) étudiée pour mesurer une pression indicative d'une pression dans le cylindre avec l'au moins un capteur de pression (80) dans le moteur pendant une phase de compression avant le début d'un allumage dans le cylindre, une unité de détermination de dégagement de chaleur (50) étudiée pour déterminer une caractéristique de dégagement de chaleur, une unité d'évaluation (60) étudiée pour évaluer un décalage de pression de cylindre de la mesure de pression réalisée en utilisant la caractéristique de dégagement de chaleur et une variation de volume du cylindre, et une unité d'étalonnage (70) étudiée pour étalonner le capteur de pression (80) en réponse au décalage de pression de cylindre évalué.

16. Moteur à combustion interne à piston selon la revendication 15, **caractérisé en ce qu'**un collecteur (36) relié à des cylindres (30) via des conduites (14) comprend au moins un capteur de pression (82) pour mesurer une pression dans le collecteur (36) et qui est en connexion avec le système d'étalonnage (10).

17. Moteur à combustion interne à piston selon la revendication 15, **caractérisé en ce qu'**un système d'étalonnage de capteur de pression (10) est doté d'instructions pour exécuter un procédé d'étalonnage d'un capteur de pression de cylindre selon l'une quelconque des revendications 1 - 14.

Fig. 1

EP 3 237 871 B1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010124758 A1

- EP 1936157 A